# EUROPEAN PATENT APPLICATION

(11) **EP 2 802 032 A1**
(43) Date of publication of application: **12.11.2014**
(21) Application number: 12864644.5
(22) Date of filing: 28.12.2012
(51) Int. Cl.: H01M 8/04, H01M 8/10

(54) **FUEL CELL SYSTEM**

(30) Priority: 05.01.2012 JP 2012000360
(71) Applicant: Nissan Motor Co., Ltd, Yokohama-shi, Kanagawa 221-0023 (JP)
(72) Inventor: IKEZOE, Keigo, Atsugi-shi Kanagawa 243-0123 (JP); CHIKUGO, Hayato, Atsugi-shi Kanagawa 243-0123 (JP); MAKINO, Shinichi, Atsugi-shi Kanagawa 243-0123 (JP)
(74) Representative: Osha Liang SARL
(86) International application number: PCT/JP2012/084072
(87) International publication number: WO 2013/103134

(57) **Abstract**

A fuel cell system generates power by supplying anode gas and cathode gas to a fuel cell. The fuel cell system includes: a control valve configured to control pressure of the anode gas supplied to the fuel cell; a pulsation operation unit configured to cause pulsation of pressure of anode gas in the fuel cell in accordance with a predetermined pressure by controlling an opening degree of the control valve based on an operating condition of the fuel cell system; and a stagnation point determination unit configured to determine, based on a change in the pressure of the anode gas in the fuel cell, whether or not a stagnation point exists where an anode gas concentration is locally low in the fuel cell. When it is determined that the stagnation point exists in the fuel cell, the pulsation operation unit increases the predetermined pressure in execution of a pulsation operation.

## Description

### TECHNICAL FIELD

The present invention relates to a fuel cell system.

### BACKGROUND ART

JP-A-2007-517369 describes a conventional fuel cell system in which a normally-closed solenoid valve is provided to an anode gas supply passage, and a normally-open solenoid valve and a buffer tank (recycle tank) are provided to an anode gas exhaust passage such that the former is positioned upstream relative to the latter.

This conventional fuel cell system does not circulate anode gas, that is to say, does not supply unused anode gas exhausted to the anode gas exhaust passage back to the anode gas supply passage. In this fuel cell system, unused anode gas accumulated in the buffer tank is recycled by causing it to flow back to a fuel cell stack through periodical opening and closing of the normally-closed solenoid valve and the normally-open solenoid valve.

### SUMMARY OF INVENTION

However, it has been discovered that, depending on the operating condition, the aforementioned conventional fuel cell system creates a stagnation point where the anode gas concentration is locally low in an anode gas flow channel inside a fuel cell. It has also been discovered that continuation of a pulsation operation with the existence of the stagnation point in the anode gas flow channel undesirably decreases the efficiency of power generation due to shortage of anode gas necessary for reaction and deteriorates the fuel cell.

The present invention has been made in view of the above problems, and aims to suppress execution of a pulsation operation with the existence of a stagnation point in an anode gas flow channel, a decrease in the efficiency of power generation, and deterioration in a fuel cell.

### SOLUTION TO PROBLEM

According to one aspect of the present invention, a fuel cell system is provided that generates power by supplying anode gas and cathode gas to a fuel cell. The fuel cell system includes: a control valve configured to control pressure of the anode gas supplied to the fuel cell; a pulsation operation unit configured to cause pulsation of pressure of anode gas in the fuel cell in accordance with a predetermined pressure by controlling an opening degree of the control valve based on an operating condition of the fuel cell system; and a stagnation point determination unit configured to determine, based on a change in the pressure of the anode gas in the fuel cell, whether or not a stagnation point exists where an anode gas concentration is locally low in the fuel cell. When it is determined that the stagnation point exists in the fuel cell, the pulsation operation unit increases the predetermined pressure in execution of a pulsation operation.

Embodiments and advantages of the present invention will be described in detail below with reference to the attached drawings.

### BRIEF DESCRIPTION OF DRAWINGS

Fig. 1A is a schematic perspective view of a fuel cell according to a first embodiment of the present invention.
Fig. 1B is a cross-sectional view of the fuel cell shown in Fig. 1A taken along the line B-B.
Fig. 2 is a schematic diagram showing a configuration of a fuel cell system that does not circulate anode gas according to the first embodiment of the present invention.
Fig. 3 is an explanatory diagram showing a pulsation operation executed at the time of steady operation, that is to say, when the operating condition of the fuel cell system is steady.
Fig. 4 is an explanatory flowchart showing pulsation operation control according to the first embodiment of the present invention.
Fig. 5 shows a map for calculating the estimated lowest anode gas concentration in flow channels, Cmin, based on the amount of drop in anode pressure, ΔP, and on buffer concentration before down transition, Cbuff.
Fig. 6 is a map for calculating the estimated distance to a stagnation point, Lmin, based on the amount of drop in anode pressure, ΔP, and on anode pressure before down transition, Ppre.
Fig. 7 is a table for calculating the anode pressure upper limit value for exhausting the stagnation point, P1, based on the estimated distance to the stagnation point, Lmin.
Fig. 8 is an explanatory diagram showing the effects of the pulsation operation control according to the first embodiment of the present invention.
Fig. 9 is an explanatory flowchart showing pulsation operation control according to a second embodiment of the present invention.
Fig. 10 is an explanatory flowchart showing control for restoring anode pressure according to a third embodiment of the present invention.
Fig. 11 is a time chart showing a change in anode pressure when the anode pressure is decreased to the lower limit pressure by fully closing a pressure regulator valve at the time of down transient operation.
Fig. 12 is an explanatory diagram showing the reason why a portion is created where the anode gas concentration is locally low compared to other portions in anode gas flow channels.
Fig. 13 is an explanatory diagram showing a problem associated with the case where a down transient operation is re-executed after anode pressure has been increased following a down transient operation.

### DESCRIPTION OF EMBODIMENTS

### (First Embodiment)

A fuel cell includes an electrolyte membrane interposed between an anode electrode (fuel electrode) and a cathode electrode (oxidant electrode), and generates power by supplying anode gas (fuel gas) containing hydrogen to the anode electrode and cathode gas (oxidant gas) containing oxygen to the cathode electrode. The following electrode reactions proceed in the anode electrode and the cathode electrode.

Anode Electrode: 2H₂ → 4H⁺ + 4e- (1)

Cathode Electrode: 4H⁺ + 4e⁻ + O₂ → 2H₂O (2)

The fuel cell generates an electromotive force of approximately one volt by these electrode reactions (1) and (2).

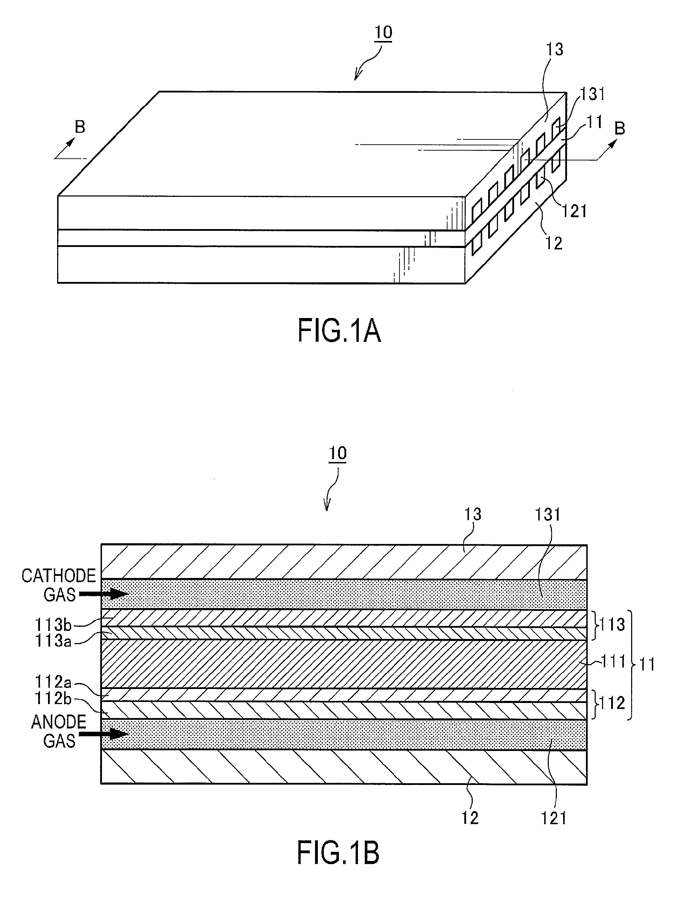

Figs. 1A and 1B are explanatory diagrams showing a configuration of a fuel cell 10 according to a first embodiment of the present invention. Fig. 1A is a schematic perspective view of the fuel cell 10. Fig. 1B is a cross-sectional view of the fuel cell 10 shown in Fig. 1A taken along the line B-B.

The fuel cell 10 is configured such that an anode separator 12 and a cathode separator 13 are arranged respectively on the front surface and the back surface of a membrane electrode assembly (hereinafter, "MEA") 11.

The MEA 11 includes an electrolyte membrane 111, an anode electrode 112 and a cathode electrode 113. In the MEA 11, the anode electrode 112 is arranged on one surface of the electrolyte membrane 111, and the cathode electrode 113 is arranged on the other surface of the electrolyte membrane 111.

The electrolyte membrane 111 is a proton-conducting ion exchange membrane formed from fluorine resin. The electrolyte membrane 111 exhibits favorable electroconductive properties in a wet state.

The anode electrode 112 includes a catalyst layer 112a and a gas diffusion layer 112b. The catalyst layer 112a is in contact with the electrolyte membrane 111. The catalyst layer 112a is formed from platinum or carbon black particles on which platinum and the like are supported. The gas diffusion layer 112b is arranged on the outer side of the catalyst layer 112a (the side opposite from the electrolyte membrane 111), and is in contact with the anode separator 12. The gas diffusion layer 112b is formed from material with sufficient gas diffusion properties and electroconductive properties, such as a carbon cloth woven with carbon fiber yarns.

Similarly to the anode electrode 112, the cathode electrode 113 also includes a catalyst layer 113a and a gas diffusion layer 113b.

The anode separator 12 is in contact with the gas diffusion layer 112b. The anode separator 12 includes a plurality of groove-like anode gas flow channels 121 on the side in contact with the gas diffusion layer 112b. Anode gas is supplied to the anode electrode 112 via the anode gas flow channels 121.

The cathode separator 13 is in contact with the gas diffusion layer 113b. The cathode separator 13 includes a plurality of groove-like cathode gas flow channels 131 on the side in contact with the gas diffusion layer 113b. Cathode gas is supplied to the cathode electrode 113 via the cathode gas flow channels 131.

The anode gas and the cathode gas flow in the anode gas flow channels 121 and the cathode gas flow channels 131, respectively, in parallel with each other in the same direction. Alternatively, the anode gas and the cathode gas may flow in parallel with each other in opposite directions.

When the above-described fuel cell 10 is used as a power source for an automobile, a fuel cell stack made by stacking a few hundred fuel cells 10 is used to supply a large amount of power required. In this case, a fuel cell system for supplying anode gas and cathode gas to the fuel cell stack is configured, and power for driving the automobile is drawn therefrom.

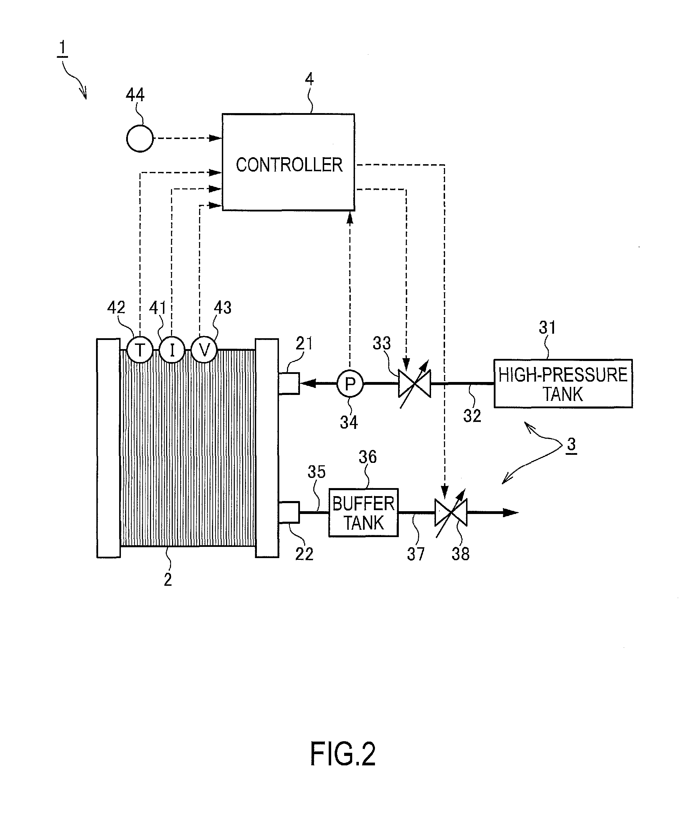

Fig. 2 is a schematic diagram showing a configuration of a fuel cell system 1 that does not circulate anode gas according to the first embodiment of the present invention.

The fuel cell system 1 includes a fuel cell stack 2, an anode gas supply apparatus 3, and a controller 4.

The fuel cell stack 2 is made by stacking a plurality of fuel cells 10. With anode gas and cathode gas supplied to the fuel cell stack 2, the fuel cell stack 2 generates power required to drive an automobile (for example, power required to drive a motor).

It should be noted that a cathode gas supply/exhaust apparatus for supplying/exhausting cathode gas to/from the fuel cell stack 2, and a cooling apparatus for cooling the fuel cell stack 2, do not serve as main components in the present invention, and are thus omitted from the drawings to facilitate the understanding. In the present embodiment, the air is used as cathode gas.

The anode gas supply apparatus 3 includes a high-pressure tank 31, an anode gas supply passage 32, a pressure regulator valve 33, a pressure sensor 34, an anode gas exhaust passage 35, a buffer tank 36, a purge passage 37, and a purge valve 38.

The high-pressure tank 31 stores anode gas to be supplied to the fuel cell stack 2 while maintaining the anode gas in a high-pressure state.

The anode gas supply passage 32 is a passage for supplying the anode gas discharged from the high-pressure tank 31 to the fuel cell stack 2. One end of the anode gas supply passage 32 is connected to the high-pressure tank 31, and the other end thereof is connected to an anode gas inlet 21 of the fuel cell stack 2.

The pressure regulator valve 33 is provided to the anode gas supply passage 32. The pressure regulator valve 33 supplies the anode gas discharged from the high-pressure tank 31 to the fuel cell stack 2 while regulating the anode gas to a desired pressure. The pressure regulator valve 33 is an electromagnetic valve capable of regulating an opening degree continuously or in a stepwise manner. This opening degree is controlled by the controller 4.

The pressure sensor 34 is provided to the anode gas supply passage 32 such that it is positioned downstream relative to the pressure regulator valve 33. The pressure sensor 34 detects pressure of anode gas flowing in a portion of the anode gas supply passage 32 positioned downstream relative to the pressure regulator valve 33. In the present embodiment, the pressure of the anode gas detected by this pressure sensor 34 serves as a substitute for pressure of the entire anode system including the anode gas flow channels 121 in the fuel cell stack and the buffer tank 36 (hereinafter, "anode pressure").

One end of the anode gas exhaust passage 35 is connected to an anode gas outlet 22 of the fuel cell stack 2, and the other end thereof is connected to an upper portion of the buffer tank 36. The anode gas exhaust passage 35 exhausts mixed gas (hereinafter, "anode off-gas") containing excess anode gas that has not been used in the electrode reactions and inert gas that has permeated into the anode gas flow channels 121 from the cathode side, such as nitrogen and water vapor.

The buffer tank 36 temporarily accumulates the anode off-gas that has flown through the anode gas exhaust passage 35. In the buffer tank 36, a part of water vapor from the anode off-gas is condensed to liquid and hence separated from the anode off-gas.

One end of the purge passage 37 is connected to a lower portion of the buffer tank 36. The other end of the purge passage 37 is an open end. The anode off-gas and liquid accumulated in the buffer tank 36 pass through the purge passage 37 and then are exhausted to the outer air from the open end.

The purge valve 38 is provided to the purge passage 37. The purge valve 38 is an electromagnetic valve capable of regulating an opening degree continuously or in a stepwise manner. This opening degree is controlled by the controller 4. The amount of anode off-gas exhausted from the buffer tank 36 to the outer air via the purge passage 37 is regulated by regulating the opening degree of the purge valve 38. In this way, the anode gas concentration in the buffer tank 36 is regulated to a desired concentration suited for the operating condition of the fuel cell system 1. More specifically, the opening degree of the purge valve 38 is regulated such that the anode gas concentration in the buffer tank 36 increases as the target output calculated in accordance with the operating condition of the fuel cell system 1 increases. Provided that the operating condition of the fuel cell system 1 remains the same, the inert gas concentration decreases and the anode gas concentration increases in the buffer tank 36 as the opening degree of the purge valve 38 increases.

The controller 4 is composed of a microcomputer including a central processing unit (CPU), a read-only memory (ROM), a random-access memory (RAM) and an input/output interface (I/O interface).

Signals for detecting the operating condition of the fuel cell system 1 are input to the controller 4. These signals are from the aforementioned pressure sensor 34, and also from an electric current sensor 41 that detects an electric current output from the fuel cell stack 2, a temperature sensor 42 that detects the temperature of cooling water for cooling the fuel cell stack 2 (hereinafter, "cooling water temperature"), a voltage sensor 43 that detects voltage output from the fuel cell stack 2, and an accelerator stroke sensor 44 that detects the amount by which an accelerator pedal is depressed (hereinafter, "accelerator depression amount").

Based on these input signals, the controller 4 periodically opens and closes the pressure regulator valve 33 so as to execute the pulsation operation of periodically increasing and decreasing anode pressure, and also regulates the opening degree of the purge valve 38 so as to regulate the flow rate of anode off-gas exhausted from the buffer tank 36 and control the anode gas concentration in the buffer tank 36 to a desired concentration.

In the fuel cell system 1 that does not circulate anode gas, if anode gas is constantly supplied from the high-pressure tank 31 to the fuel cell stack 2 by leaving the pressure regulator valve 33 open, anode off-gas containing unused anode gas exhausted from the fuel cell stack 2 is constantly exhausted from the buffer tank 36 to the outer air via the purge passage 37. This means waste of the anode off-gas.

In view of this, in the present embodiment, the pulsation operation of periodically increasing and decreasing anode pressure through periodical opening and closing of the pressure regulator valve 33 is executed. Execution of the pulsation operation allows anode off-gas accumulated in the buffer tank 36 to flow back to the fuel cell stack 2 when anode pressure is decreased. In this way, anode gas contained in the anode off-gas can be recycled. As a result, the amount of anode gas exhausted to the outer air can be reduced, thereby eliminating waste.

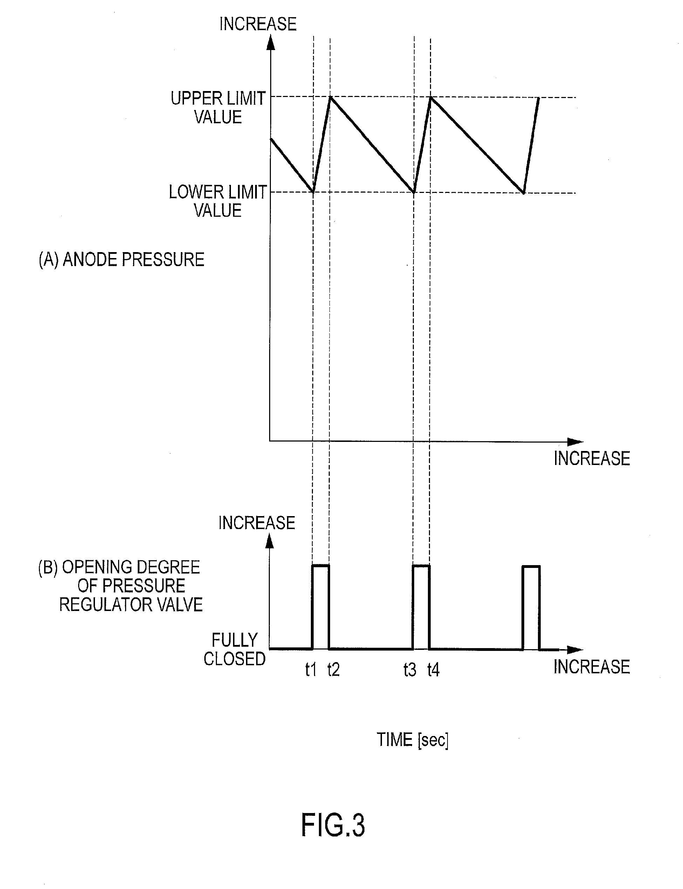

With reference to Fig. 3, the following describes the pulsation operation and the reason why anode off-gas accumulated in the buffer tank 36 flows back to the fuel cell stack 2 when anode pressure is decreased.

Fig. 3 is an explanatory diagram showing a pulsation operation executed at the time of steady operation, that is to say, when the operating condition of the fuel cell system 1 is steady.

As shown in (A) of Fig. 3, the controller 4 calculates the target output of the fuel cell stack 2 based on the operating condition of the fuel cell system 1 (the load on the fuel cell stack), and sets the upper limit value and the lower limit value of anode pressure in accordance with the target output. The range from the lower limit pressure to the upper limit pressure (hereinafter, "pulsation range") increases as the target output increases. The anode pressure is periodically increased and decreased between the upper limit value and the lower limit value set for the anode pressure.

More specifically, when the anode pressure reaches the lower limit value at time t1, the pressure regulator valve 33 is opened to the opening degree that at least allows the anode pressure to increase to the upper limit value, as shown in (B) of Fig. 3. In this state, the anode gas is supplied from the high-pressure tank 31 to the fuel cell stack 2 and exhausted to the buffer tank 36.

When the anode pressure reaches the upper limit value at time t2, the pressure regulator valve 33 is fully closed so as to stop the supply of the anode gas from the high-pressure tank 31 to the fuel cell stack 2, as shown in (B) of Fig. 3. As a result, due to the aforementioned electrode reaction (1), the anode gas left in the anode gas flow channels 121 inside the fuel cell stack is consumed over time, and therefore the anode pressure decreases in proportion to the consumption of the anode gas.

Furthermore, with the consumption of the anode gas left in the anode gas flow channels 121, pressure in the buffer tank 36 temporarily becomes higher than pressure in the anode gas flow channels 121. This causes anode off-gas to flow back from the buffer tank 36 to the anode gas flow channels 121. Consequently, the anode gas left in the anode gas flow channels 121, as well as anode gas contained in the anode off-gas that has flown back to the anode gas flow channels 121, is consumed over time, resulting in a further decrease in the anode pressure.

When the anode pressure reaches the lower limit value at time t3, the pressure regulator valve 33 is opened similarly to the case of time t1. Then, when the anode pressure reaches the upper limit value again at time t4, the pressure regulator valve 33 is fully closed.

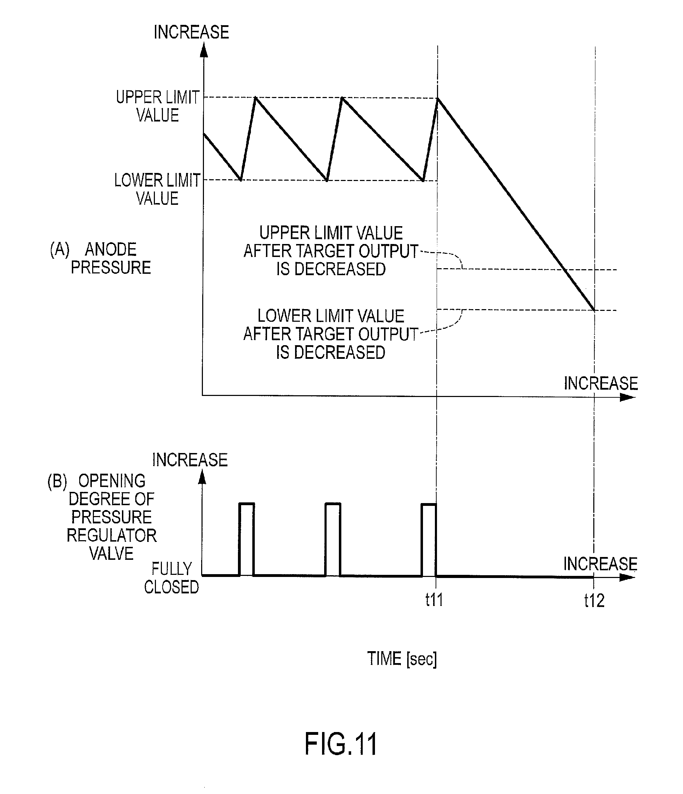

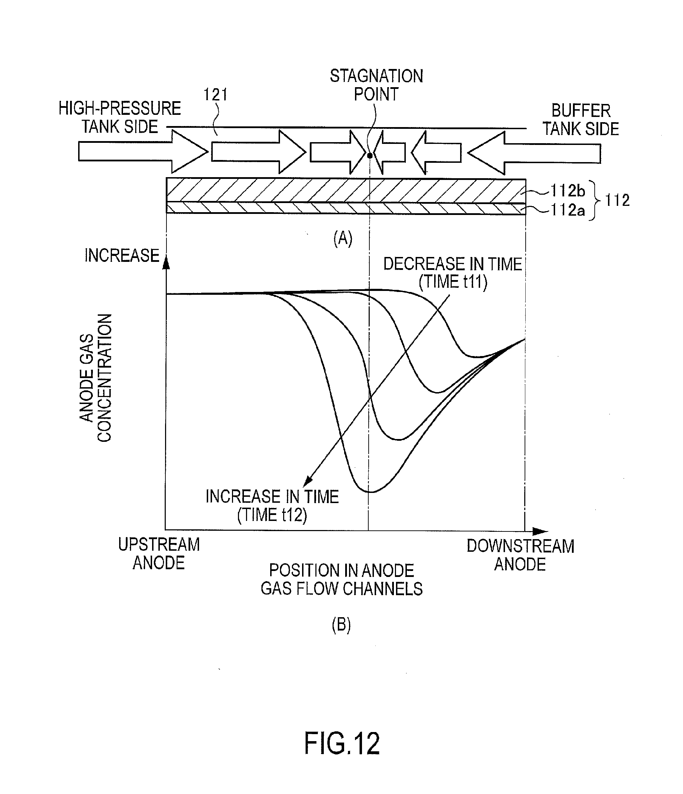

It has been discovered that, in the case where the above-described pulsation operation is executed, a portion is created where the anode gas concentration is locally low compared to other portions in the anode gas flow channels 121 when the operating condition of the fuel cell system 1 changes, more specifically, at the time of down transient operation associated with a decrease in the target output of the fuel cell stack 2. This will be described below with reference to Figs. 11 and 12.

Fig. 11 is a time chart showing a change in the anode pressure when the anode pressure is decreased to the lower limit pressure by fully closing the pressure regulator valve 33 at the time of down transient operation.

When the target output of the fuel cell stack 2 is decreased due to, for example, a decrease in the accelerator depression amount at time t11, the upper limit value and the lower limit value of the anode pressure are set in accordance with the decreased target output, as shown in (A) of Fig. 11. Furthermore, as shown in (A) of Fig. 11, the pulsation range after the decrease in the target output is smaller than the pulsation range before the decrease in the target output.

Here, when the anode pressure is decreased to the lower limit value (time t12) by fully closing the pressure regulator valve 33 at time t11 as shown in (A) and (B) of Fig. 11, a portion is created where the anode gas concentration is locally low compared to other portions in the anode gas flow channels 121. A description is now given of the reason why such a portion is created with reference to Fig. 12.

Fig. 12 is an explanatory diagram showing the reason why a portion is created where the anode gas concentration is locally low compared to other portions in the anode gas flow channels 121. Referring to (A) of Fig. 12 shows the flow of anode gas and anode off-gas in the anode gas flow channels 121 when the pressure regulator valve 33 is fully closed at the time of down transient operation. Also, referring to (B) of Fig. 12 shows a chronological distribution of the anode gas concentration in the anode gas flow channels 121 when the pressure regulator valve 33 is fully closed at the time of down transient operation.

As shown in (A) of Fig. 12, when the pressure regulator valve 33 is fully closed, the anode gas left in the anode gas flow channels 121 flows toward the buffer tank 36 side due to a pressure difference caused by consumption of the anode gas. Meanwhile, with the consumption of the anode gas left in the anode gas flow channels 121, pressure in the buffer tank 36 temporarily becomes higher than pressure in the anode gas flow channels 121. This causes anode off-gas to flow back from the buffer tank 36 side to the anode gas flow channels 121.

As a result, in a portion where the anode gas flowing in the anode gas flow channels 121 toward the buffer tank 36 side and the anode off-gas flowing back from the buffer tank 36 side to the anode gas flow channels 121 merge, a stagnation point is created where the flow velocities of these gases become zero.

If such a stagnation point is created in the anode gas flow channels 121, nitrogen contained in the anode off-gas that is not used in the aforementioned electrode reaction (1) accumulates in the vicinity of the stagnation point over time. Consequently, the nitrogen concentration becomes high in the vicinity of the stagnation point compared to other portions over time. Therefore, as shown in (B) of Fig. 12, the anode gas concentration becomes low in the vicinity of the stagnation point compared to other portions over time. In the following description, the anode gas concentration at this stagnation point will be referred to as the "lowest anode gas concentration in flow channels" as necessary.

As described above, after the down transient operation, the stagnation point exists in the anode gas flow channels 121, that is to say, a portion is created where the anode gas concentration is locally low compared to other portions in the anode gas flow channels 121. After the down transient operation, anode pressure is increased by opening the pressure regulator valve 33. At this time, if the range of increase in the anode pressure is small, the pulsation operation is executed with the stagnation point remaining in the anode gas flow channels 121, that is to say, with the existence of the portion where the anode gas concentration is locally low compared to other portions in the anode gas flow channels 121.

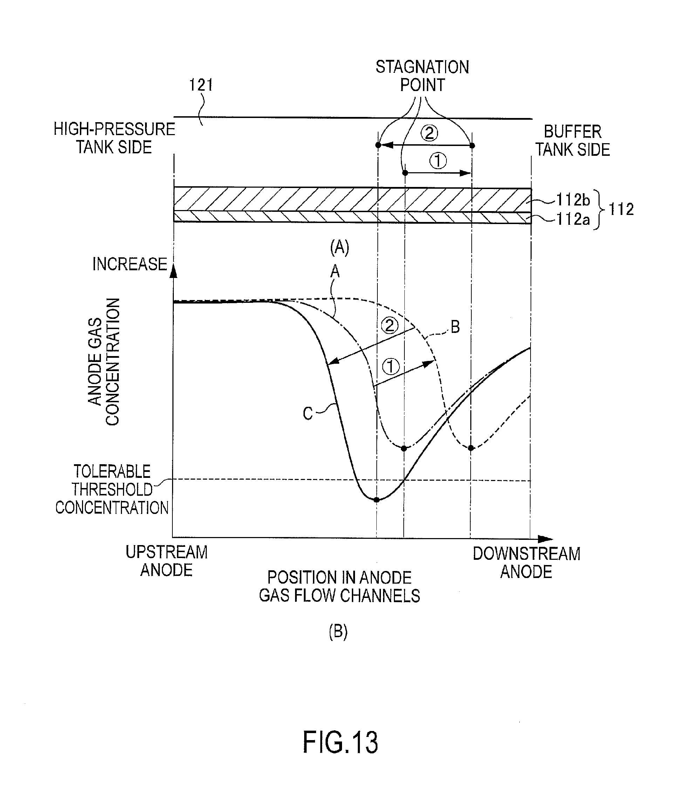

It has been discovered that, if the down transient operation is re-executed in this state, the lowest anode gas concentration in flow channels becomes low compared to the previous down transient operation, thus giving rise to the problem of a decrease in the efficiency of power generation or deterioration in the fuel cell. This problem will be described below with reference to Fig. 13.

Fig. 13 is an explanatory diagram showing a problem associated with the case where the down transient operation is re-executed after the anode pressure has been increased following the down transient operation.

Referring to (A) of Fig. 13 shows transition in the stagnation point in the anode gas flow channels 121 when the down transient operation is re-executed after the anode pressure has been increased following the down transient operation. Also, referring to (B) of Fig. 13 shows transition in the distribution of the anode gas concentration in the anode gas flow channels 121 when the down transient operation is re-executed after the anode pressure has been increased following the down transient operation.

In (B) of Fig. 13, a dash-and-dot line A represents the distribution of the anode gas concentration after the first down transient operation has ended. A dash line B represents the distribution of the anode gas concentration after the anode pressure has been increased following the down transient operation. A solid line C represents the distribution of the anode gas concentration after the down transient operation is re-executed following the increase in the anode pressure.

As shown in (A) of Fig. 13, when the first down transient operation has ended, a stagnation point exists in the anode gas flow channels 121. Furthermore, as indicated by the dash-and-dot line A in (B) of Fig. 13, a portion is created where the anode gas concentration is locally low compared to other portions in the anode gas flow channels 121.

After the down transient operation, anode gas is supplied from the high-pressure tank 31 side to the anode gas flow channels 121 by opening the pressure regulator valve 33. As a result, the stagnation point moves toward the buffer tank 36 side. At this time, however, if the range of increase in the anode pressure is small, the stagnation point cannot move to the outside of the anode gas flow channels 121 as shown in (A) of Fig. 13, with the result that the stagnation point remains in the anode gas flow channels 121. That is to say, as indicated by the dash line B in (B) of Fig. 13, even after the anode pressure has been increased, the portion where the anode gas concentration is locally low compared to other portions remains in the anode gas flow channels 121.

If the down transient operation is re-executed in this state, the lowest anode gas concentration in flow channels further decreases as indicated by the solid line C in (B) of Fig. 13. This leads to a higher possibility of the lowest anode gas concentration in flow channels falling below a predetermined tolerable threshold concentration. If the lowest anode gas concentration in flow channels falls below the tolerable threshold concentration, there is a possibility that voltage in the corresponding portion changes into negative voltage due to inhibition of the aforementioned electrode reactions (1) and (2). This may cause a decrease in the efficiency of power generation and deterioration in the fuel cell 10.

In view of this, in the present embodiment, when increasing the anode pressure following the execution of the down transient operation, the upper limit value of the anode pressure is set so as to move the stagnation point to the outside of the anode gas flow channels 121. A description is now given of this pulsation operation control according to the present embodiment.

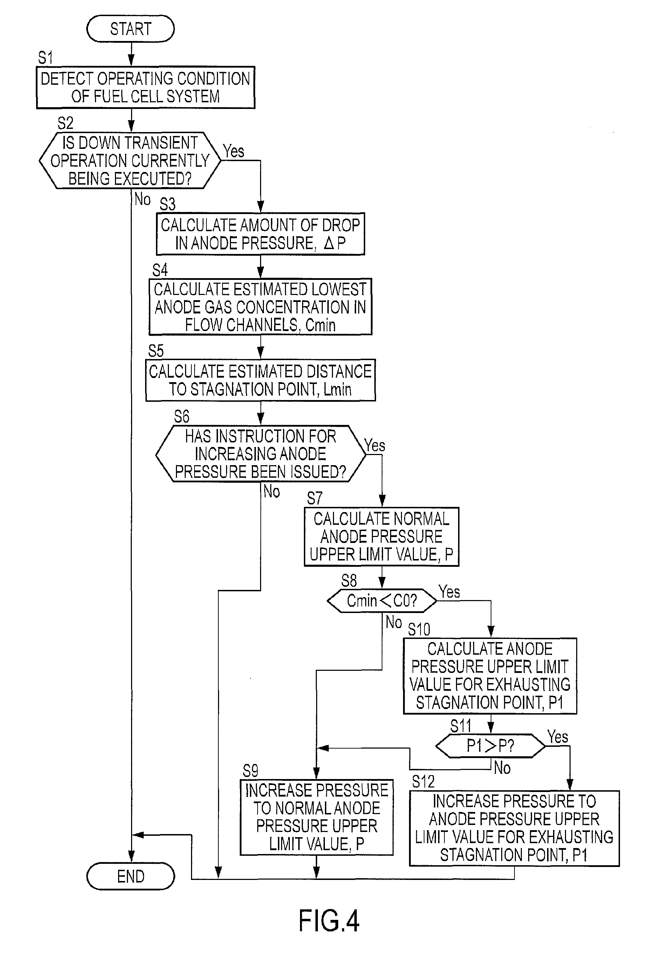

Fig. 4 is an explanatory flowchart showing the pulsation operation control according to the present embodiment.

In step S1, the controller 4 reads detection signals from various sensors, thereby detecting the operating condition of the fuel cell system 1.

In step S2, the controller 4 determines whether or not the down transient operation is currently being executed. The controller 4 executes the process of step S3 if the down transient operation is currently being executed, and ends the present processing if the down transient operation is not currently being executed.

In step S3, the controller 4 calculates a pressure difference ΔP between anode pressure immediately before the start of the down transient operation (hereinafter, "anode pressure before down transition"), Ppre, and the current anode pressure, Pnow (this difference is hereinafter referred to as "amount of drop in anode pressure").

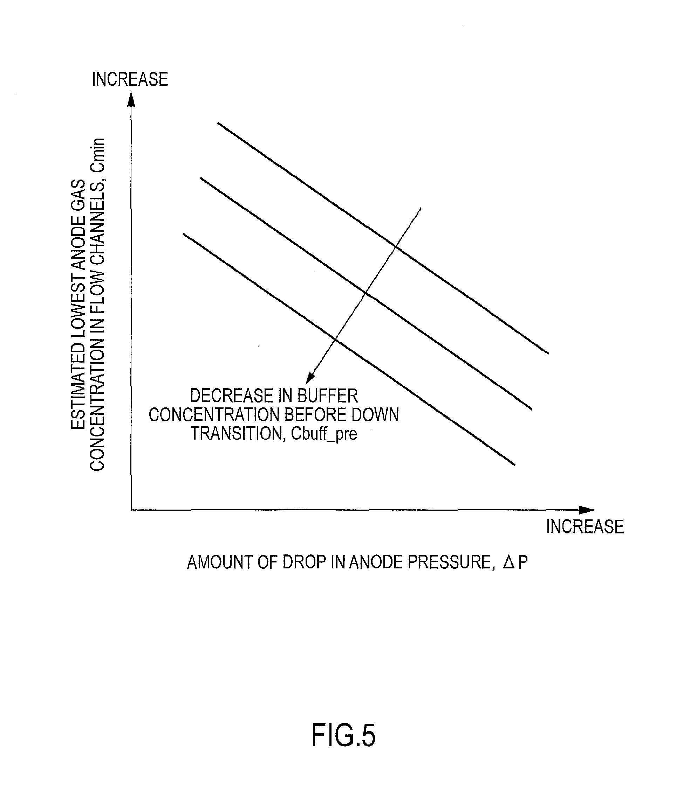

In step S4, the controller 4 refers to a later-described map shown in Fig. 5, and calculates the estimated lowest anode gas concentration in flow channels, Cmin, based on the amount of drop in anode pressure, ΔP, and on the anode gas concentration in the buffer tank 36 immediately before the start of the down transient operation (hereinafter, "buffer concentration before down transition"), Cbuff_pre.

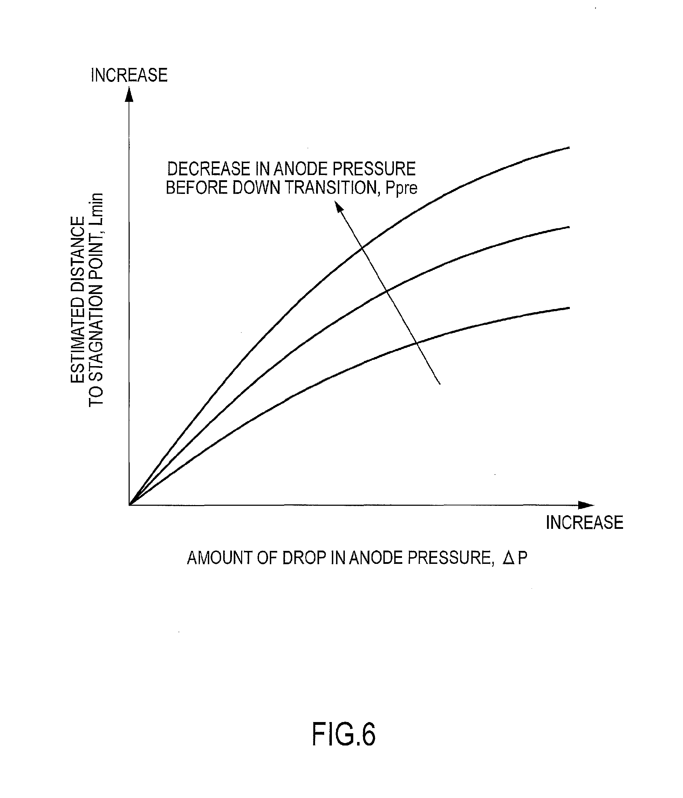

In step S5, the controller 4 refers to a later-described map shown in Fig. 6, and calculates the estimated distance, Lmin, from ends of the anode gas flow channels 121 on the buffer tank 36 side to the stagnation point based on the amount of drop in anode pressure, ΔP, and on the anode pressure before down transition, Ppre (hereinafter, this estimated distance is referred to as "estimated distance to the stagnation point").

In step S6, the controller 4 determines whether or not an instruction for increasing the anode pressure has been issued. The controller 4 determines that the instruction for increasing the anode pressure has been issued, for example, when the anode pressure has been decreased to the lower limit value, and when the accelerator pedal is depressed before the anode pressure is decreased to the lower limit value. The controller 4 executes the process of step S7 if the instruction for increasing the anode pressure has been issued, and ends the present processing if such an instruction has not been issued.

In step S7, based on the target output of the fuel cell stack 2, the controller 4 calculates a normal upper limit value of anode pressure (hereinafter, "normal anode pressure upper limit value"), P, which is set when the steady operation is executed in accordance with the target output. The normal anode pressure upper limit value, P, increases as the target output of the fuel cell stack 2 increases.

In step S8, the controller 4 determines whether or not the estimated lowest anode gas concentration in flow channels, Cmin, is lower than a criterion value C0. If the lowest anode gas concentration in flow channels becomes lower than this criterion value C0, there is a possibility that the lowest anode gas concentration in flow channels falls below the tolerable threshold concentration when the down transient operation is re-executed after the anode pressure has been increased. The controller 4 executes the process of step S9 if the estimated lowest anode gas concentration in flow channels, Cmin, is equal to or higher than the criterion value C0. On the other hand, the controller 4 executes the process of step S10 if the estimated lowest anode gas concentration in flow channels, Cmin, is lower than the criterion value C0.

In step S9, the controller 4 uses the normal anode pressure upper limit value, P, as the upper limit value of the anode pressure after the down transient operation, and controls the pressure regulator valve 33 such that the anode pressure is increased to the normal anode pressure upper limit value, P.

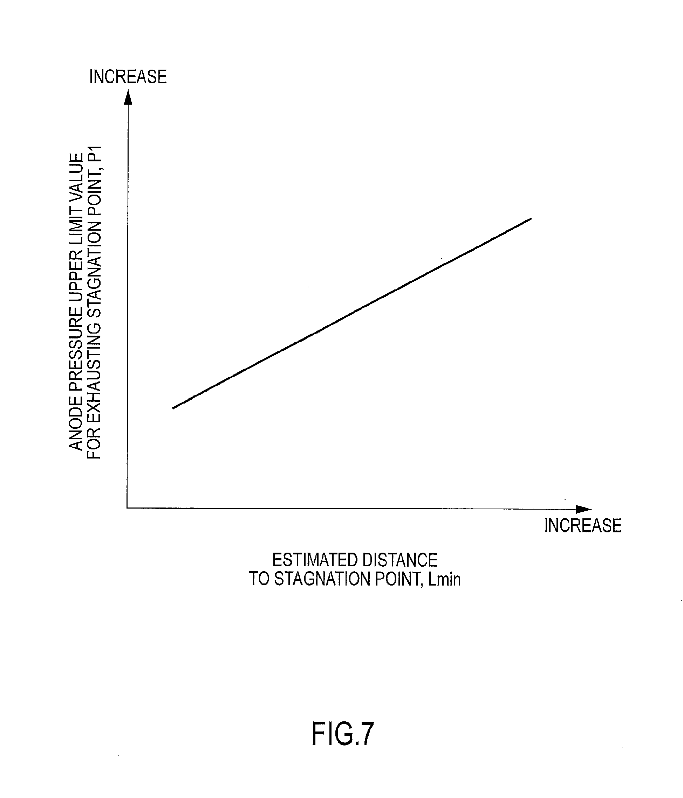

In step S10, the controller 4 refers to a later-described table shown in Fig. 7, and calculates P1, which is the upper limit value of the anode pressure that enables the stagnation point to move to the outside of the anode gas flow channels 121 based on the estimated distance to the stagnation point, Lmin. Hereinafter, the upper limit value of the anode pressure, P1, thus calculated based on the estimated distance to the stagnation point, Lmin, is referred to as "anode pressure upper limit value for exhausting the stagnation point, P1".

In step S11, the controller 4 determines whether or not the anode pressure upper limit value for exhausting the stagnation point, P1, is larger than the normal anode pressure upper limit value, P. The controller 4 executes the process of step S12 if the anode pressure upper limit value for exhausting the stagnation point, P1, is larger than the normal anode pressure upper limit value, P. On the other hand, the controller 4 executes the process of step S9 if the anode pressure upper limit value for exhausting the stagnation point, P1, is equal to or smaller than the normal anode pressure upper limit value, P.

In step S12, the controller 4 uses the anode pressure upper limit value for exhausting the stagnation point, P1, as the upper limit value of the anode pressure after the down transient operation, and controls the pressure regulator valve 33 such that the anode pressure is increased to the anode pressure upper limit value for exhausting the stagnation point, P1. In this way, the pulsation range in which the anode pressure is increased is large compared to the case where the anode pressure is increased with the normal anode pressure upper limit value, P, serving as the upper limit pressure. That is to say, if the estimated lowest anode gas concentration in flow channels, Cmin, becomes equal to or higher than the criterion value C0 during the down transient operation, the pulsation range in which the anode pressure is increased after the down transient operation is larger than the normal pulsation range set in accordance with the target output.

Fig. 5 shows a map for calculating the estimated lowest anode gas concentration in flow channels, Cmin, based on the amount of drop in anode pressure, ΔP, and on the buffer concentration before down transition, Cbuff_pre.

As shown in Fig. 5, the estimated lowest anode gas concentration in flow channels, Cmin, during the down transient operation decreases as the amount of drop in anode pressure, ΔP, increases and as the buffer concentration before down transition, Cbuff_pre, decreases.

Fig. 6 is a map for calculating the estimated distance to the stagnation point, Lmin, based on the amount of drop in anode pressure, ΔP, and on the anode pressure before down transition, Ppre.

As shown in Fig. 6, the estimated distance to the stagnation point, Lmin, during the down transient operation increases as the amount of drop in anode pressure, ΔP, increases and as the anode pressure before down transition, Ppre, decreases.

Fig. 7 is a table for calculating the anode pressure upper limit value for exhausting the stagnation point, P1, based on the estimated distance to the stagnation point, Lmin.

As shown in Fig. 7, the anode pressure upper limit value for exhausting the stagnation point, P1, increases as the estimated distance to the stagnation point, Lmin, increases.

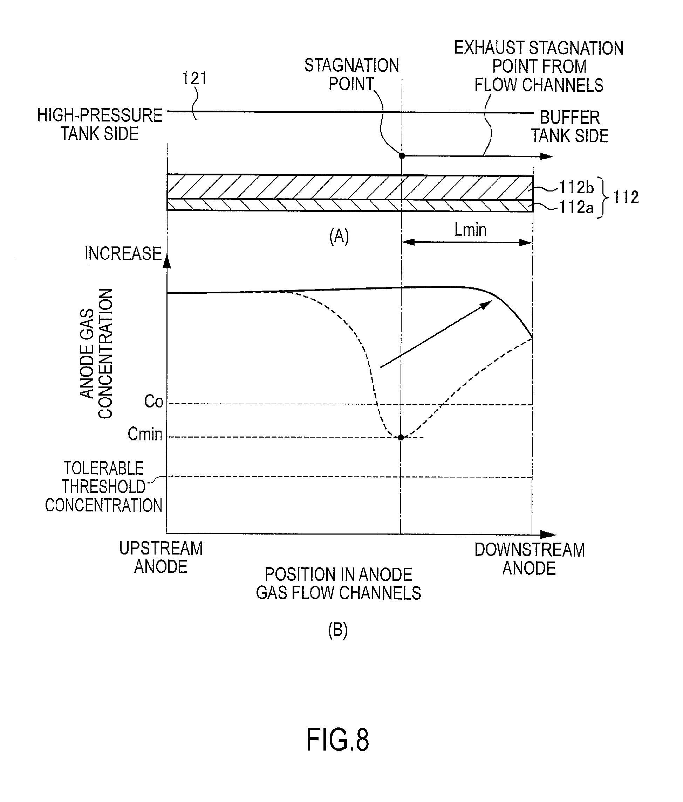

Fig. 8 is an explanatory diagram showing the effects of the pulsation operation control according to the present embodiment.

Referring to (A) of Fig. 8 shows transition in the stagnation point in the anode gas flow channels 121 when the anode pressure has been increased to the anode upper limit value for exhausting the stagnation point, P1, after the down transient operation. Also, referring to (B) of Fig. 8 shows transition of the distribution of the anode gas concentration in the anode gas flow channels 121 when the anode pressure has been increased to the anode upper limit value for exhausting the stagnation point, P1, after the down transient operation.

In (B) of Fig. 8, a dash line represents the distribution of the anode gas concentration after the down transient operation. A solid line represents the distribution of the anode gas concentration when the anode pressure has been increased to the anode upper limit value for exhausting the stagnation point, P1, after the down transient operation.

As shown in (A) of Fig. 8, it is possible to move the stagnation point to the outside of the anode gas flow channels 121 by increasing the anode pressure to the anode upper limit value for exhausting the stagnation point, P1, after the down transient operation. Consequently, as indicated by the solid line in (B) of Fig. 8, after the anode pressure has been increased, a portion where the anode gas concentration is locally low compared to other portions does not remain in the anode gas flow channels 121. This makes it possible to suppress the lowest anode gas concentration in flow channels from falling below the tolerable threshold concentration when the down transient operation is re-executed. As a result, the efficiency of power generation can be stabilized, and deterioration in the fuel cell 10 can be suppressed.

### (Second Embodiment)

A description is now given of a second embodiment of the present invention. The present embodiment differs from the first embodiment in that a larger criterion value C0 is set for a larger normal anode pressure upper limit value, P. The following description will be given with a focus on this difference. It should be noted that, in the embodiments described below, the elements that are similar to those of the above-described first embodiment in terms of function are given the same reference signs thereas, and redundant descriptions are omitted as appropriate.

When an instruction for increasing anode pressure is issued during the down transient operation, basically, the normal anode pressure upper limit value, P, is set in accordance with the operating condition of the fuel cell system 1.

When the down transient operation is re-executed after the anode pressure has been increased to the normal anode pressure upper limit value, P, the larger the normal anode pressure upper limit value, P, the longer the period of time required to decrease the anode pressure to the lower limit value during the re-execution of the down transient operation. Therefore, if the stagnation point remains in the anode gas flow channels 121 when the anode pressure has been increased to the normal anode pressure upper limit value, P, there is a higher possibility of the lowest anode gas concentration in flow channels falling below the tolerable threshold concentration during the re-execution of the down transient operation.

In view of this, in the present embodiment, a larger criterion value C0 is set for a larger normal anode pressure upper limit value, P. A description is now given of this pulsation operation control according to the present embodiment.

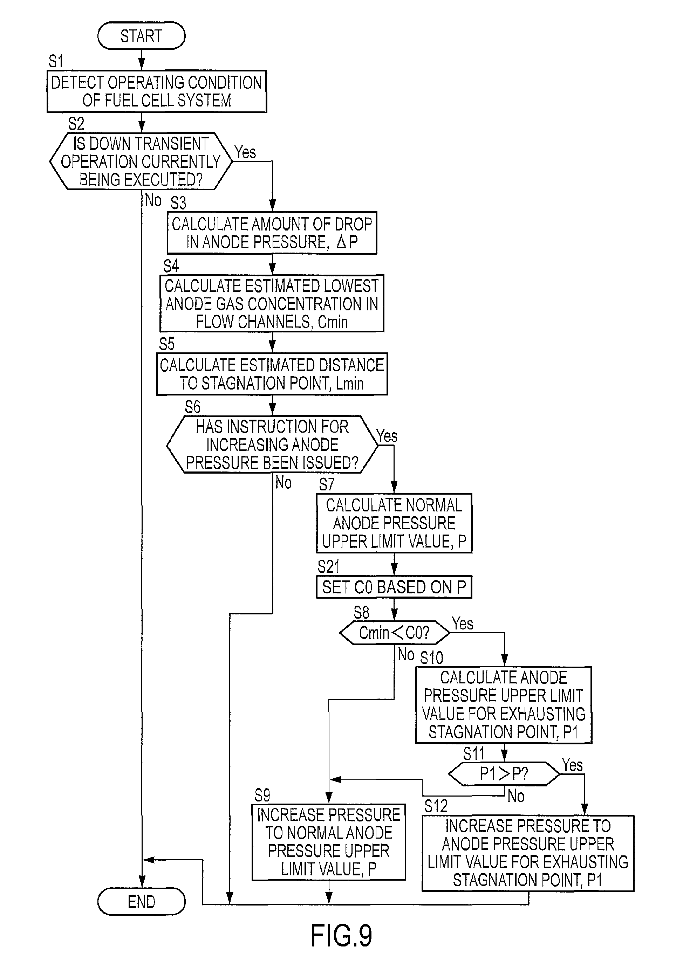

Fig. 9 is an explanatory flowchart showing the pulsation operation control according to the present embodiment.

In step S21, the controller 4 sets the criterion value C0 based on the normal anode pressure upper limit value, P. More specifically, the controller 4 sets a larger criterion value C0 for a larger normal anode pressure upper limit value, P.

According to the present embodiment described above, a larger criterion value C0 is set for a larger normal anode pressure upper limit value, P. Therefore, the anode pressure upper limit value for exhausting the stagnation point, P1, is calculated based on the estimated distance to the stagnation point, Lmin, even when the estimated lowest anode gas concentration in flow channels, Cmin, is relatively high compared to the first embodiment. Also, when increasing the anode pressure after the down transient operation, the upper limit value of the anode pressure is set to be at least larger than the anode pressure upper limit value for exhausting the stagnation point, P1.

In this way, the stagnation point does not remain in the anode gas flow channels 121 after the anode pressure has been increased. Therefore, even if a period of time of re-execution of the down transient operation is extended, it is possible to suppress the lowest anode gas concentration in flow channels from falling below the tolerable threshold concentration during the re-execution of the down transient operation. As a result, the efficiency of power generation can be stabilized, and deterioration in the fuel cell 10 can be suppressed.

### (Third Embodiment)

A description is now given of a third embodiment of the present invention. The present embodiment differs from the first embodiment in that, once the anode pressure has been increased to the anode pressure upper limit value for exhausting the stagnation point, P1, after the down transient operation, the anode pressure is restored to the normal anode pressure upper limit value, P, based on the anode gas concentration in the buffer tank 36. The following description will be given with a focus on this difference.

As stated earlier, the controller 4 regulates the opening degree of the purge valve 38 in accordance with the operating condition of the fuel cell system 1 so as to control the buffer concentration (the anode gas concentration in the buffer tank 36) Cbuff to be equal to a desired management concentration corresponding to the operating condition of the fuel cell system 1.

If the buffer concentration Cbuff becomes lower than this management concentration, there is a possibility of a decrease in the amount of anode gas supplied from the buffer tank 36 to the anode gas flow channels 121 during the pulsation operation. Such a decrease could possibility result in shortage of anode gas used in the electrode reactions and a decrease in the efficiency of power generation.

When the anode pressure is increased after the down transient operation, inert gas accumulated in the anode gas flow channels 121 during the down transient operation, such as nitrogen, is pushed into the buffer tank 36. As a result, in the buffer tank 36, the inert gas concentration increases, whereas the anode gas concentration decreases. Hence, there is a possibility that the buffer concentration Cbuff falls below the management concentration immediately after the anode pressure is increased.

Provided that the opening degree of the purge valve 38 remains the same, the larger the upper limit value of the anode pressure, the higher the flow rate of anode off-gas exhausted to the outside of the fuel cell system 1 via the purge valve 38 when the anode pressure is increased. That is to say, provided that the opening degree of the purge valve 38 remains the same, the larger the upper limit value of the anode pressure, the higher the buffer concentration Cbuff.

In view of this, in the present embodiment, when the upper limit value of the anode pressure is set at the anode pressure upper limit value for exhausting the stagnation point, P1, the upper limit value of the anode pressure is kept at the anode pressure upper limit value for exhausting the stagnation point, P1, until an estimated buffer concentration Cbuff becomes equal to or higher than the management concentration. When the buffer concentration Cbuff has become equal to or higher than the management concentration, the upper limit value of the anode pressure is restored to the normal anode pressure upper limit value, P1. The following describes this control for restoring the anode pressure according to the present embodiment.

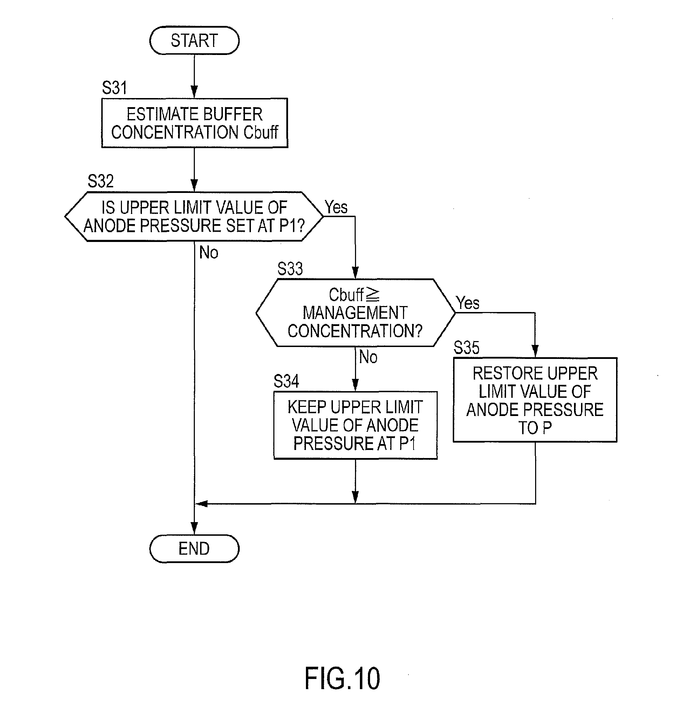

Fig. 10 is an explanatory flowchart showing the control for restoring the anode pressure according to the present embodiment.

In step S31, the controller 4 estimates a buffer concentration Cbuff. In the present embodiment, a buffer concentration Cbuff after the anode pressure has been increased is estimated in the following manner.

At the time of steady operation, the buffer concentration Cbuff is controlled to be equal to a desired management concentration corresponding to the operating condition of the fuel cell system 1. After shifting to the down transient operation, the buffer concentration Cbuff gradually decreases in accordance with the load on the fuel cell stack 2. When the anode pressure is increased, inert gas flows from the anode gas flow channels 121 into the buffer tank 36, and therefore the buffer concentration Cbuff further decreases.

It is considered that the amount of inert gas that flows into the buffer tank 36 when the anode pressure is increased is a sum of: the amount of inert gas that flows from the buffer tank 36 into the anode gas flow channels 121 and accumulates in the anode gas flow channels 121 during the down transient operation before the anode pressure is increased; and the amount of inert gas that permeates into the anode gas flow channels 121 from the cathode side also during the down transient operation.

It should be noted that the amount of inert gas that flows from the buffer tank 36 into the anode gas flow channels 121 and accumulates in the anode gas flow channels 121 during the down transient operation can be calculated by referring to, for example, a map that has been generated in advance through an experiment and the like in accordance with the amount of drop in anode pressure, ΔP. The larger the amount of drop in anode pressure, ΔP, the larger the amount of inert gas that flows from the buffer tank 36 into the anode gas flow channels 121 and accumulates in the anode gas flow channels 121 during the down transient operation.

Also, the amount of inert gas that permeates into the anode gas flow channels 121 from the cathode side during the down transient operation can be calculated by referring to, for example, a map that has been generated in advance through an experiment and the like in accordance with the permeability of the electrolyte membrane and a pressure difference between cathode pressure and anode pressure. The permeability of the electrolyte membrane is a physical property value determined by, for example, the membrane pressure of the electrolyte membrane. A larger amount of inert gas permeates into the anode gas flow channels 121 from the cathode side during the down transient operation when the cathode pressure is higher than the anode pressure.

Therefore, the buffer concentration Cbuff at the time of increase in the anode pressure can be estimated in accordance with the buffer concentration Cbuff at the time of steady operation and the amount of inert gas that flows into the buffer tank 36 at the time of increase in the anode pressure. After the anode pressure has been increased, the buffer concentration Cbuff can be estimated in accordance with the opening degree of the purge valve 38 that is determined in accordance with the operating condition of the fuel cell system 1, a period of time that has elapsed, and the like.

In step S32, the controller 4 determines whether or not the upper limit value of the anode pressure is set at the anode pressure upper limit value for exhausting the stagnation point, P1. The controller 4 executes the process of step S33 if the upper limit value of the anode pressure is set at the anode pressure upper limit value for exhausting the stagnation point, P1, and ends the present processing otherwise.

In step S33, the controller 4 determines whether or not the buffer concentration Cbuff is equal to or higher than the management concentration. If the buffer concentration Cbuff is lower than the management concentration, the controller 4 executes the process of step S34. On the other hand, if the buffer concentration Cbuff is equal to or higher than the management concentration, the controller 4 executes the process of step S35.

In step S34, the controller 4 executes the pulsation operation while keeping the upper limit value of the anode pressure at the anode pressure upper limit value for exhausting the stagnation point, P1.

In step S35, the controller 4 restores the upper limit value of the anode pressure to the normal anode pressure upper limit value, P, and then executes the pulsation operation.

According to the present embodiment as described above, when the upper limit value of the anode pressure is set at the anode pressure upper limit value for exhausting the stagnation point, P1, the upper limit value of the anode pressure is restored to the normal anode pressure upper limit value, P, and the pulsation operation is executed after the buffer concentration Cbuff has become equal to or higher than the management concentration. This makes it possible to suppress the buffer concentration Cbuff from falling below the management concentration immediately after the anode pressure is increased. As a result, the efficiency of power generation can be stabilized, and deterioration in the fuel cell 10 can be suppressed.

This concludes the description of the embodiments of the present invention. It should be noted that the above-described embodiments merely illustrate a part of application examples of the present invention, and are not intended to restrict a technical scope of the present invention to specific configurations according to the above-described embodiments.

For example, in the above-described third embodiment, when the upper limit value of the anode pressure is set at the anode pressure upper limit value for exhausting the stagnation point, P1, the upper limit value of the anode pressure is restored to the normal anode pressure upper limit value, P, if the buffer concentration Cbuff has become equal to or higher than the management concentration. However, it is permissible to restore the upper limit value of the anode pressure from the anode pressure upper limit value for exhausting the stagnation point, P1, to the normal anode pressure upper limit value, P, in a stepwise manner in accordance with an increase in the buffer concentration after the anode pressure has been increased. This also makes it possible to achieve the effects similar to the effects achieved in the third embodiment.

The present application claims the benefit of priority from Japanese Patent Application No. 2012-000360, filed in the Japan Patent Office on January 5, 2012, the disclosure of which is incorporated herein by reference in its entirety.

## Claims

1. A fuel cell system that generates power by supplying anode gas and cathode gas to a fuel cell, comprising:
a control valve configured to control pressure of the anode gas supplied to the fuel cell;
a pulsation operation unit configured to cause pulsation of pressure of anode gas in the fuel cell in accordance with a predetermined pressure by controlling an opening degree of the control valve based on an operating condition of the fuel cell system; and
a stagnation point determination unit configured to determine, based on a change in the pressure of the anode gas in the fuel cell, whether or not a stagnation point exists where an anode gas concentration is locally low in the fuel cell, wherein
when it is determined that the stagnation point exists in the fuel cell, the pulsation operation unit increases the predetermined pressure in execution of a pulsation operation.

2. The fuel cell system according to claim 1, further comprising:
a buffer unit configured to accumulate anode off-gas exhausted from the fuel cell; and
a stagnation point position estimation unit configured to estimate a position of the stagnation point in the fuel cell, wherein
the farther the position of the stagnation point is from the buffer unit, the more the pulsation operation unit increases the predetermined pressure in the execution of the pulsation operation.

3. The fuel cell system according to claim 2, further comprising
a lowest anode gas concentration estimation unit configured to estimate a lowest anode gas concentration at the position of the stagnation point in the fuel cell, wherein
when the lowest anode gas concentration is lower than a predetermined criterion value, the pulsation operation unit increases the predetermined pressure such that the stagnation point is exhausted from within the fuel cell to the buffer unit.

4. The fuel cell system according to claim 3, wherein
the pulsation operation unit includes:
a base upper limit pressure calculation unit configured to calculate a base upper limit pressure for pressure of anode gas in accordance with a load on the fuel cell; and
a stagnation point exhaustion upper limit pressure calculation unit configured to calculate a stagnation point exhaustion upper limit pressure, which is an upper limit pressure for the pressure of the anode gas that enables the stagnation point to be exhausted from within the fuel cell to the buffer unit, in accordance with the position of the stagnation point in the fuel cell, and
the pulsation operation unit executes the pulsation operation using one of the base upper limit pressure and the stagnation point exhaustion upper limit pressure that is higher than the other as an upper limit pressure for the pressure of the anode gas.

5. The fuel cell system according to claim 4, wherein
the pulsation operation unit increases the criterion value as the base upper limit pressure increases.

6. The fuel cell system according to claim 4 or 5, further comprising
a buffer unit anode gas concentration estimation unit configured to estimate an anode gas concentration in the buffer unit, wherein
when the stagnation point exhaustion upper limit pressure is used as an upper limit pressure for the pressure of the anode gas, the pulsation operation unit restores the upper limit pressure for the pressure of the anode gas to the base upper limit pressure when the anode gas concentration in the buffer unit has become equal to or higher than a predetermined management concentration.

7. The fuel cell system according to claim 4 or 5, further comprising a buffer unit anode gas concentration estimation unit configured to estimate an anode gas concentration in the buffer unit, wherein
when the stagnation point exhaustion upper limit pressure is used as an upper limit pressure for the pressure of the anode gas, if the anode gas concentration in the buffer unit is lower than a predetermined management concentration, the pulsation operation unit restores the upper limit pressure for the pressure of the anode gas to the base upper limit pressure in a stepwise manner in accordance with an increase in the anode gas concentration in the buffer unit.
